# EUROPÄISCHE PATENTSCHRIFT

(11) **EP 1 741 855 B1**
(45) Veröffentlichungstag und Bekanntmachung des Hinweises auf die Patenterteilung: **16.10.2013**
(21) Anmeldenummer: 06012787.5
(22) Anmeldetag: 22.06.2006
(51) Int. Cl.: E05B 47/06, H01F 7/122

(54) **Zuhaltung für ein Bauteil zum Verschliessen einer Öffnung**
Blocking device for an element closing an opening
Dispositif de blocage pour un élément de fermeture d'une ouverture

(30) Priorität: 09.07.2005 DE 102005032172
(43) Veröffentlichungstag der Anmeldung: 10.01.2007
(73) Patentinhaber: K.A. Schmersal Holding KG, 42279 Wuppertal (DE)
(72) Erfinder: Hoepken, Hermann, 45549 Sprockhövel (DE); Schulze, Klaus, 42477 Radevormwald (DE); Letzel, Helmut, 51069 Köln (DE)
(74) Vertreter: Henseler, Daniela

(56) Entgegenhaltungen:
- DE-A1- 10 202 628
- DE-A1- 10 339 363
- DE-U1- 7 823 558
- FR-A1- 2 308 178
- FR-A5- 2 057 899

## Beschreibung

Die Erfindung betrifft eine Zuhaltung für ein Bauteil zum Verschließen einer Öffnung nach dem Oberbegriff des Anspruchs 1.

Bei Zuhaltungen ist es bekannt, vgl. z.B. DE 103 39 363 A1, einen Stößel, der zwischen einer verriegelnden und einer entriegelten Endstellung beweglich ist, zu verwenden, wobei eine Elektromagnetspule als Antrieb für den Stößel und zum Halten von diesem in einer der Endstellungen dient. Eine Feder wird hierbei als Rückstelleinrichtung für den Stößel in seine Ruhestellung verwendet, d.h. daß die Elektromagnetspule den Stößel in dessen Arbeitsstellung durch entsprechende Bestromung halten muß, wozu man zwar einen gegenüber dem Anzugsstrom verringerten Haltestrom verwenden kann, jedoch muß zum Halten permanent der Haltestrom durch die Elektromagnetspule fließen, was mit entsprechender Wärmeentwicklung verbunden ist.

Aus FR 2 057 899 A5 ist eine Zuhaltung nach dem Oberbegriff des Anspruchs 1 bekannt.

Aufgabe der Erfindung ist es, eine Zuhaltung nach dem Oberbegriff des Anspruchs 1 zu schaffen, bei der der Energieaufwand und damit auch die Wärmeentwicklung verringert ist.

Diese Aufgabe wird entsprechend den Merkmalen des Anspruchs 1 gelöst.

Weitere Ausgestaltungen der Erfindung sind der nachfolgenden Beschreibung und den Unteransprüchen zu entnehmen.

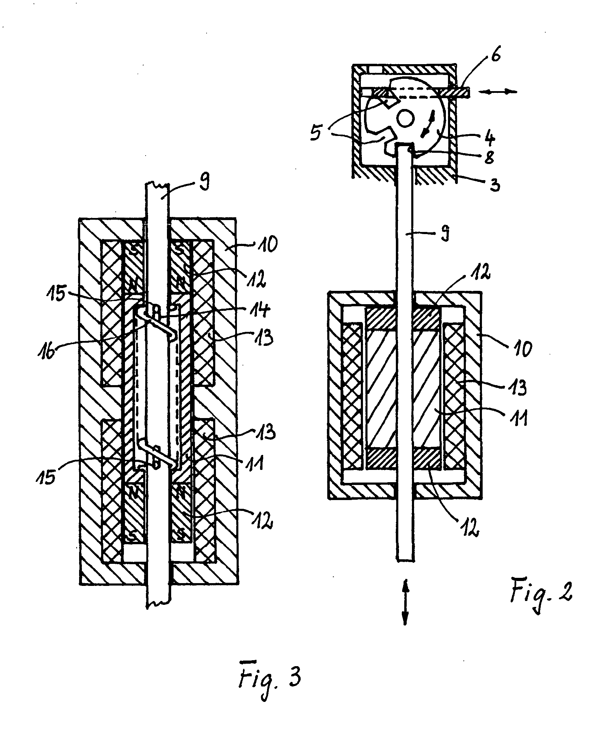

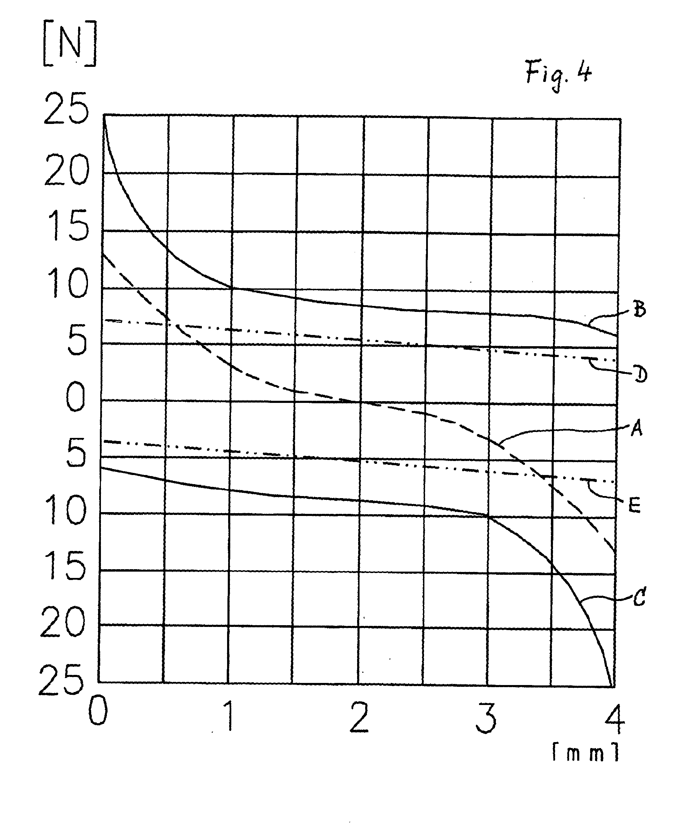

Die Erfindung wird nachstehend anhand von in den beigefügten Abbildungen dargestellten Ausführungsbeispielen näher erläutert.
Fig. 1 zeigt schematisch eine Zugangsschutzeinrichtung.
Fig. 2 zeigt schematisch im Schnitt eine Zuhaltung für ein Bauteil zum Verschließen einer Öffnung, die nicht Teil des Erfindung als solcher ist.
Fig. 3 zeigt schematisch im Schnitt eine Ausführungsform einer Zuhaltung für ein Bauteil zum Verschließen einer Öffnung.
Fig. 4 zeigt eine Weg-Kraft-Kennlinie einer Elektromagneteinrichtung für die Zuhaltung von Fig. 2.

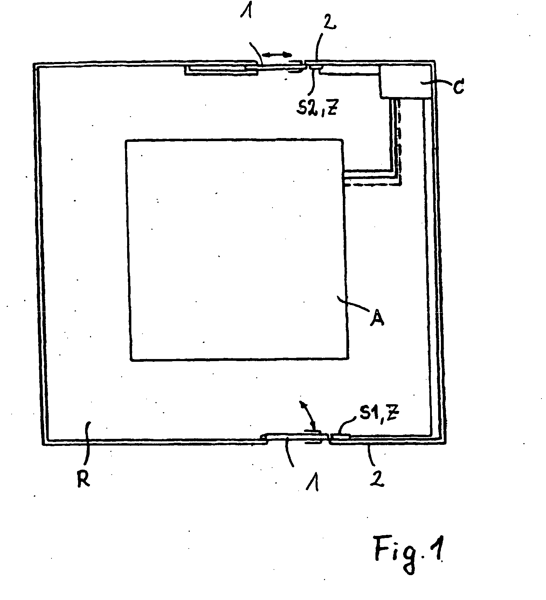

Fig. 1 zeigt eine Zugangsschutzeinrichtung für einen begehbaren, verschließbaren Raumbereich R einer maschinellen Anlage A (hierunter sind beispielsweise Maschinen oder Komponenten wie Roboter zum Herstellen, Behandeln oder Bearbeiten sowie daraus bestehende und gegebenenfalls auch chemische Anlagen od.dgl. zu verstehen). Der Raumbereich R ist über mehrere Türen 1 als bewegliche Teile gegenüber feststehenden Wänden 2 als feststehendem Teil zugänglich. Die gegebenenfalls umlaufend abgedichteten Türen 1 können durch Schwenken bzw. Schieben geöffnet bzw. geschlossen werden. Zwischen den Türen 1 und einer benachbarten Wand 2 befindet sich jeweils ein Sicherheitssensor S1, S2 und eine Zuhaltung Z für die Tür 1. Außerdem ist eine Steuerung C vorgesehen, die mit der maschinellen Anlage A und den Sicherheitssensoren S1, S2 gekoppelt ist, um die Zuhaltungen Z entsprechend dem Betriebszustand der maschinellen Anlage A zum Öffnen der Türen 1 freizugeben bzw. zu sperren. Wenn der Steuerung C ein Stillstehen der beweglichen Teile der maschinellen Anlage A etwa über Stillstandswächter (nicht dargestellt) signalisiert wird, gibt sie die Zuhaltungen Z frei, so daß der Raumbereich R durch Öffnen der Türen 1 begehbar wird. Stehen zumindest Teile der maschinellen Anlage A nicht still oder sind ansonsten vorzunehmende Vorkehrungen vor dem Öffnen der Türen 1 noch nicht getroffen, werden die Zuhaltungen blockiert, so daß die Türen 1 nicht geöffnet werden können. Außerdem verhindert die Steuerung C ein Inbetriebnehmen der maschinellen Anlage A bei wenigstens einer geöffneten Tür 1.
Die jeweilige Zuhaltung Z umfaßt beispielsweise eine in einem Gehäuse 3 drehbar angeordnete Kurvenscheibe 4 mit einer am Umfang befindlichen Ausnehmung 5 zur Aufnahme eines am vorzugsweise beweglichen Bauteil, etwa der Tür 1, befindlichen Betätigers 6, der durch eine Öffnung 7 in das Gehäuse 3 einführbar ist. Durch Einführen des Betätigers 6 beim Schließen der Tür 1 wird die Kurvenscheibe 4 soweit verdreht, daß eine weitere Ausnehmung 8 am Umfang der Kurvenscheibe 4 in eine Position gegenüber von einem Ende eines als Zuhalteelement dienenden Stößels 9 verdreht wird. Gleichzeitig wird durch die Verdrehung der Kurvenscheibe 4 der Schalter S1 bzw. S2 betätigt, der eine Betätigung des Stößels 9 auslöst, so daß dieser in die Ausnehmung 8 einfallen kann.
   Gegebenenfalls ist ein zweite Ausnehmung 8 am Umfang der Kurvenscheibe 4 vorhanden, so daß bei darin eingefallenem Stößel 9 die Tür 1 nicht schließbar ist, d.h. der Betätiger 6 die Kurvenscheibe 4 beim Versuch, diese durch Einführen in das Gehäuse 3 zu drehen, scheitert.
   Der Stößel 9 wird durch ein Gehäuse 10 aus magnetisierbarem Material, etwa Eisen, geradegeführt und trägt einen hülsenförmigen Anker 11 sowie an beiden Stirnseiten hiervon einen Permanentmagneten 12, die an der jeweils freien Stirnseite gleiche Polarität besitzen. Der Anker 11, ebenfalls aus magnetisierbarem Material, mit seinen beiden Permanentmagneten 12 ist innerhalb des Gehäuses 10 mit dem Stößel 9, der aus einem nicht magnetisierbaren Material wie einer Aluminiumlegierung oder Kunststoff bestehen kann, um den zum Einfallen des Stößels 9 in die Ausnehmung 8 benötigten Hub beweglich und von einer Magnetspule 13 umgeben.
   Durch entsprechend gerichtete Bestromung der Magnetspule 13 wird der Anker 11 mit dem Stößel 9 zwischen zwei Endstellungen bewegt, in denen jeweils einer der Permanentmagneten 12 mit dem Gehäuse 10 in Magnetschluß steht und in dieser Endstellung auch bei abgeschaltetem Strom durch Magnetkraft gehalten wird.
   Anstelle einer Magnetspule 13 können auch zwei verwendet werden, die in Stößellängsrichtung hintereinander angeordnet und jeweils nur für eine Verstellrichtung vorgesehen sind, so daß sie dementsprechend getrennt ansteuerbar sind.
   Die stabilen Endstellungen des Stößels 9 ergeben sich infolge der Permanentmagnete 12 bei unbestromter Magnetspule 13. Die Permanentmagnete 12 sind hierbei unter Berücksichtigung eines sich ergebenden geringen Luftspaltes zum Gehäuse 10 hin auszulegen.
   Dementsprechend ist der so ausgebildete Stößelantrieb in seiner Empfindlichkeit gegenüber Erschütterungen im Vergleich zu einem Halten mit abgesenktem Spulenstrom vermindert.
   Außerdem kann es bei einer derartigen Zuhaltung nicht zu einem versehentlichen Einschluß von Reinigungs- oder Wartungspersonal bei stromloser maschineneller Anlage A kommen, da der Anker 11 nach dem Abschalten des Spulenstroms in seiner dann eingenommenen stabilen Endstellung verharrt.
   Auch ist ein ungewolltes Öffnen der Zuhaltung, wie es bei Ausfall des zum Halten verwendeten Spulenstroms ermöglicht wird, ausgeschlossen, da die jeweilige Endstellung des Stößels 9 auch ohne Stromzufuhr stabil ist.
   Bei der in Fig. 3 dargestellten Ausführungsform sind in dem Gehäuse 10 zwei Magnetspulen 13, wie oben bereits erwähnt vorgesehen, wobei zusätzlich der Anker 11 mit den daran befestigten Permanentmagneten 13 gegenüber dem Stößel 9 um den Stößelhub verschiebbar ist. Hierbei ist der Stößel 9 in Stößellängsrichtung mit zwei zueinander beabstandeten Langlöchern 14 versehen, deren Länge dem Stößelhub entspricht. Die Langlöcher 14 nehmen jeweils einen Anschlag in Form eines Stiftes 15 auf, wobei zwischen den beiden Stiften 15 eine Feder 16 - im dargestellten Ausführungsbeispiel im Innern des Ankers 11 befindlich und als Schraubenfeder ausgebildet um den Stößel 9 herum angeordnet - angeordnet ist.
   Hierdurch kann die Bewegung des Ankers 11 bei blockiertem Stößel 9 direkt in eine Verkürzung der Länge der Feder 16 umgesetzt werden, wobei der jeweilige im Inneren des Ankers 11 an diesem anliegende Stift 15 im zugehörigen Langloch 14 verschoben wird, während der gegenüberliegende Stift 15 aber die Lage der Feder 16 zum Stößel 9 durch sein Anliegen am Ende seines Langlochs 14 im Stößel 9 beibehält.
   Die in der Feder 16 so speicherbare potentielle Energie kann zu einem späteren Zeitpunkt wieder in die Bewegung des Stößels 9 umgewandelt werden.
   Hierdurch wird erreicht, daß bei beispielsweise infolge in der Zuhaltung auftretender Reibung gehemmtem Stößel 9 eine zusätzliche Kraft zur Verfügung gestellt wird, um den Stößel 9 zu bewegen. Dabei sollte die Vorspannung der Feder 16 geringer sein als die Anfangskraft des Ankers 11 bei bestromter Magnetspule 13, aber gleichzeitig größer als die zur Aufrechterhaltung der Endstellung des Stößels 9 benötigte Kraft. Gleichzeitig sollte ferner die Endkraft bei zusätzlich gespannter Feder 16 geringer als die Haltekraft des Ankers 11 in der Endstellung, aber gleichzeitig größer als die zur Überwindung aller bewegungshemmenden Gegenkräfte zu Beginn der Stößelbewegung notwendige Antriebskraft sein. Hierdurch erübrigt sich eine mehrfache Bestromung der Magnetspule 13, da eine bewegungshemmende Gegenkraft bereits bei der ersten Bestromung infolge Federunterstützung überwunden wird.
   Anstelle von Stiften 15 können die Anschläge auch beispielsweise durch Scheiben oder dergleichen Elemente gebildet werden, die bezüglich des Stößels 9 in Stößellängsrichtung um den Ankerhub verschiebbar angeordnet sind.
   Die Weg-Kraft-Kennlinie von Fig. 4 für einen beispielhaften Stößelhub von 4 mm zeigt als Kurve A die Kennlinie der stromlosen Zuhaltung, so daß lediglich die Permanentmagnete 12 wirken, die in der jeweiligen Endstellung des Stößelhubs (entsprechend dem rechten bzw. linken Rand des Diagramms) ihre größte Haftkraft (willkürlich gewählt) entwickeln. - Die Kurven B bzw. C stellen die Kennlinien der Zuhaltung bei bestromter Elektromagnetanordnung zum Verriegeln bzw. zum Entriegeln dar, wobei das rechte Ende der Kurve B bzw. das linke Ende der Kurve C die jeweilige Anfangskraft der Elektromagnetanordnung zu Beginn des Ver- bzw. Entriegelungsvorgangs darstellen. - Die Kurven D bzw. E zeigen die Federkennlinie der Feder 16 für den Ver- bzw. Entriegelungsvorgang. Die Federkennlinie ist in dem fraglichen Hubbereich allgemein eine Gerade.

## Patentansprüche

1. Zuhaltung für ein Bauteil (1) zum Verschließen einer Öffnung, mit einem Stößel (9), der zwischen einer verriegelnden und einer entriegelten Endstellung in Stößellängsrichtung beweglich geführt ist, und mit einer Elektromagnetanordnung mit einer Magnetspule (13) und einem Element als Antrieb für den Stößel (9), wobei das Element an jeder Stirnseite Permanentmagneten (12) trägt, **dadurch gekennzeichnet, daß** das Element als Anker (11) ausgestaltet ist und ein die Elektromagnetanordnung umgebendes Gehäuse (10) aus magnetisierbarem Material vorgesehen ist und jeweils einer der Permanentmagneten an dem im Gehäuse (10) befindlichen Anker (11) in seiner jeweiligen Endstellung mit dem Gehäuse (10) in Magnetschluß bringbar ist und zwischen Stößel (9) und Anker (11) eine Federanordnung vorgesehen ist, die bei blockiertem Stößel (9) durch Verschieben des Ankers (11) von einer seiner Endstellungen in die andere spannbar ist.

2. Zuhaltung nach Anspruch 1, **dadurch gekennzeichnet, daß** die Elektromagnetanordnung zwei in Stößellängsrichtung hintereinander angeordnete Magnetspulen (13) umfaßt.

3. Zuhaltung nach Anspruch 2, **dadurch gekennzeichnet, daß** die Magnetspulen (13) unabhängig voneinander strombeaufschlagbar sind.

4. Zuhaltung nach Anspruch 1, **dadurch gekennzeichnet, daß** die Federanordnung zwei jeweils endseitig an einer Feder (16) angreifende Anschläge (15) umfaßt, die in Stößellängsrichtung um den Ankerhub verschiebbar angeordnet sind.

5. Zuhaltung nach Anspruch 4, **dadurch gekennzeichnet, daß** der Stößel (9) mit zwei sich in Stößellängsrichtung erstreckenden Langlöchern (14) versehen ist, die jeweils einen in Form eines Stiftes (15) ausgebildeten Anschlag aufnehmen.

6. Zuhaltung nach einem der Ansprüche 1, 4 oder 5, **dadurch gekennzeichnet, daß** die Federanordnung eine den Stößel (9) umgebende Schraubenfeder (16) umfaßt.

7. Zuhaltung nach einem der Ansprüche 1 bis 6, **dadurch gekennzeichnet, daß** der Anker (11) den Stößel (9) gehäuseartig umgreift.

8. Zuhaltung nach einem der Ansprüche 1 bis 7, **dadurch gekennzeichnet, daß** die Federanordnung innerhalb des Ankers (11) angeordnet ist.

## Claims

1. Tumbler for a component (1) for locking an opening, having a slide (9) which is guided such that it can move between a locking end position and an unlocked end position in the longitudinal direction of the slide, and having an electromagnet arrangement comprising a magnet coil (13) and an element as a drive for the slide (9), wherein the element is fitted with permanent magnets (12) at each end, **characterized in that** the element is designed as an armature (11), and a housing (10) which surrounds the electromagnet arrangement and is composed of magnetized material is provided and in each case one of the permanent magnets on the armature (11), which is located in the housing (10), can be brought into magnetic connection with the housing (10) in its respective end position, and a spring arrangement is provided between the slide (9) and the armature (11), it being possible to stress the said spring arrangement by moving the armature (11) from one of its end positions into the other of its end positions when the slide (9) is blocked.

2. Tumbler according to Claim 1, **characterized in that** the electromagnet arrangement comprises two magnet coils (13) which are arranged one behind the other in the longitudinal direction of the slide.

3. Tumbler according to Claim 2, **characterized in that** the magnet coils (13) can be supplied with current independently of one another.

4. Tumbler according to Claim 1, **characterized in that** the spring arrangement comprises two stops (15) which each act on the end of a spring (16) and which are arranged such that they can be moved by the amount of the armature stroke in the longitudinal direction of the slide.

5. Tumbler according to Claim 4, **characterized in that** the slide (9) is provided with two elongate holes (14) which extend in the longitudinal direction of the slide and which each accommodate a stop which is designed in the form of a pin (15).

6. Tumbler according to one of Claims 1, 4 and 5, **characterized in that** the spring arrangement comprises a helical spring (16) which surrounds the slide (9).

7. Tumbler according to one of Claims 1 to 6, **characterized in that** the armature (11) engages around the slide (9) in the manner of a housing.

8. Tumbler according to one of Claims 1 to 7, **characterized in that** the spring arrangement is arranged within the armature (11).

## Revendications

1. Verrou pour élément de construction (1) pour l'obturation d'une ouverture, avec un coulisseau (9) guidé en mouvement selon une direction longitudinale de coulissement, entre une position de fin de course verrouillante et une position de fin de course déverrouillée, et avec un arrangement d'électro-aimant avec une bobine d'électro-aimant (13) et un élément d'entraînement dudit coulisseau (9), ledit élément portant des aimants permanents (12) à chaque face d'extrémité, **caractérisé en ce que** ledit élément est configuré comme noyau (11), et qu'un carter (10) en matériau magnétisable entoure ledit arrangement d'électro-aimant, et **en ce que** respectivement chacun desdits aimants permanents sur ledit noyau (11) situé dans ledit carter (10) est positionnable en fermeture magnétique avec ledit carter (10) dans la position de fin de course correspondante dudit noyau (11), et **en ce qu'**un mécanisme à ressort est situé entre ledit coulisseau (9) et ledit noyau (11), lequel mécanisme à ressort peut être armé, en blocage avec ledit coulisseau (9), lors de la translation dudit noyau (11) de l'une à l'autre de ses positions de fin de course.

2. Verrou selon la revendication 1, **caractérisé en ce que** ledit arrangement d'électro-aimant comporte deux dites bobines d'électro-aimant (13) disposées l'une derrière l'autre dans ladite direction longitudinale de coulissement.

3. Verrou selon la revendication 2, **caractérisé en ce que** lesdites bobines d'électro-aimant (13) sont alimentables en courant indépendamment l'une de l'autre.

4. Verrou selon la revendication 1, **caractérisé en ce que** ledit mécanisme à ressort comporte deux butées (15) accrochant un ressort (16) à chacune de ses extrémités, qui sont disposées de façon coulissante autour de la trajectoire du noyau dans ladite direction longitudinale de coulissement.

5. Verrou selon la revendication 4, **caractérisé en ce que** ledit coulisseau (9) est prévu avec deux lumières oblongues (14) s'étendant dans ladite direction longitudinale de coulissement, qui comportent chacune une butée constituée sous forme d'une goupille (15).

6. Verrou selon l'une des revendications 1, 4 ou 5, **caractérisé en ce que** ledit mécanisme à ressort comporte un ressort hélicoïdal (16) entourant ledit coulisseau (9).

7. Verrou selon l'une des revendications 1 à 6, **caractérisé en ce que** ledit noyau (11) enserre ledit coulisseau (9) à la façon d'une cage.

8. Verrou selon l'une des revendications 1 à 7, **caractérisé en ce que** ledit mécanisme à ressort est disposé à l'intérieur dudit noyau (11).
